# EUROPEAN PATENT APPLICATION

(11) **EP 4 491 860 A1**
(43) Date of publication of application: **15.01.2025**
(21) Application number: 24183000.9
(22) Date of filing: 19.06.2024
(51) Int. Cl.: F02D 35/02, F02D 41/14, G01L 23/22

(54) **METHOD AND CONTROL UNIT FOR DETECTING ABNORMAL COMBUSTION, IN PARTICULAR COMBUSTION KNOCK, IN AT LEAST ONE CYLINDER OF AN INTERNAL COMBUSTION ENGINE**

(30) Priority: 12.07.2023 GB 202310662
(71) Applicant: Caterpillar Energy Solutions GmbH, 68167 Mannheim (DE)
(72) Inventor: SHAH, Darshit, 68167 Mannheim (DE); SCHMITT, Florian, 68167 Mannheim (DE)
(74) Representative: Dörries, Hans Ulrich

(57) **Abstract**

Method for detecting abnormal combustion, in particular combustion knock or pre-ignition, in at least one cylinder of an internal combustion engine, comprising a step (S3) of determining cylinder specific measurement data for each one of the at least one cylinder based on measurement signals acquired by at least one vibration sensor; a step (S6) of obtaining a cylinder specific detection configuration for each one of the at least one cylinder; and a step (S7) of analyzing, for each one of the at least one cylinder, the cylinder specific measurement data based on the associated detection configuration to detect an abnormal combustion condition.

## Description

### Technical Field

The present invention refers to a method for detecting abnormal combustion, in particular combustion knock and/or pre-ignition, in at least one cylinder of an internal combustion engine. Further, the present invention refers to a control unit of an internal combustion chamber for performing such a method.

### Technological Background

For ensuring high efficiency, internal combustion engines are designed to combust an air fuel mixture within its cylinders in a timely controlled manner so as to, under ideal operating conditions, develop peak pressure in its cylinders at ideal time for maximum recovery of work from expanding gases generated upon combustion. For doing so, ignition of the air fuel mixture and propagation of a flame front within the combustion chamber needs to take place according to a strictly defined pattern. However, any deviation from ideal operating conditions may lead to a less favorable combustion of the air fuel mixture and thus to a deterioration of the engine's performance and efficiency. Any such unintended deviation from a desired combustion process within the combustion chamber may be referred to as abnormal combustion or an abnormal combustion condition in the context of the present disclosure.

One particularly unfavorable combustion condition is known as `combustion knock', also referred to as 'engine knocking' or 'knocking'. In general, combustion knock refers to an unintended combustion phenomena which may result when combustion of at least some of the air fuel mixture within a combustion chamber does not result from propagation of an intended flame front, but instead occurs outside the flame front, in particular by an unintended explosion.

A further unfavorable combustion condition is referred to as `pre-ignition' which, in the context of the present disclosure, refers to a combustion process during which combustion, in particular the propagation of the flame front within a cylinder, takes place too early during a combustion cycle compared to predefined ideal operating conditions.

Combustion knock may constitute a major inherent limitation towards higher power densities of internal combustion engines. Operating engines close to this combustion-knock-induced limit may enable high thermal efficiency, which may thus be targeted as a desired operating point. However, when exceeding this limit, combustion knock may occur which may be detrimental for the operation of the engine.

For monitoring and detecting combustion knocking during operation of an engine, different methods and systems are known which use vibration sensors for indirectly determining knocking events upon measuring and analyzing vibrations at an engine block. However, the measured vibrations may be induced by a plurality of different phenomena and events during operation of the engine which may affect detection accuracy of such indirect approaches.

### Summary of the Invention

Starting from the prior art, it is an objective to provide an improved method for detecting abnormal combustion, which in particular enables a robust and reliable combustion knock detection and/or pre-ignition detection. It is a further objective to provide a control unit of an internal combustion engine for performing such a method.

These objective are solved by means of the subject matter of the independent claims. Preferred embodiments are set forth in the present specification, the Figures as well as the dependent claims.

Accordingly, a method is provided for detecting abnormal combustion, in particular combustion knock and/or pre-ignition, in at least one, in particular more than one, cylinder of an internal combustion engine. The proposed method comprises a step of determining cylinder specific measurement data for each one of the at least one cylinder based on measurement signals acquired by at least one vibration sensor; a step of obtaining a cylinder specific detection configuration for each one of the at least one cylinder; and a step of analyzing, for each one of the at least one cylinder, the cylinder specific measurement data based on the associated detection configuration to detect an abnormal combustion condition in the associated cylinder.

Furthermore, a control unit of an internal combustion engine is provided for detecting abnormal combustion, in particular combustion knock and/or a pre-ignition condition, in at least one cylinder. The control unit is configured for determining cylinder specific measurement data for each one of the at least one cylinder based on measurement signals acquired by at least one vibration sensor, for obtaining a cylinder specific detection configuration for each one of the at least one cylinder, and for analyzing, for each one of the at least one cylinder, the cylinder specific measurement data based on the associated detection configuration to detect an abnormal combustion condition in the associated cylinder.

The proposed control unit is configured to perform the above described proposed method. Accordingly, technical features described herein in the context of the proposed method may thus also refer and be applied to the proposed control unit, and vice versa.

### Brief Description of the Drawings

The present disclosure will be more readily appreciated by reference to the following detailed description when being considered in connection with the accompanying drawings in which:
Fig. 1 shows a flow diagram illustrating an overview of a method for detecting abnormal combustion in at least one cylinder of an internal combustion engine according to an embodiment of the present invention;
Fig. 2 shows step S3 of the method according to Fig. 1 in more detail; and
Fig. 3 shows step S4 of the method according to Fig. 1 in more detail.

### Detailed Description of Preferred Embodiments

In the following, the invention will be explained in more detail with reference to the accompanying Figures. In the Figures, like elements are denoted by identical reference numerals and repeated description thereof may be omitted in order to avoid redundancies.

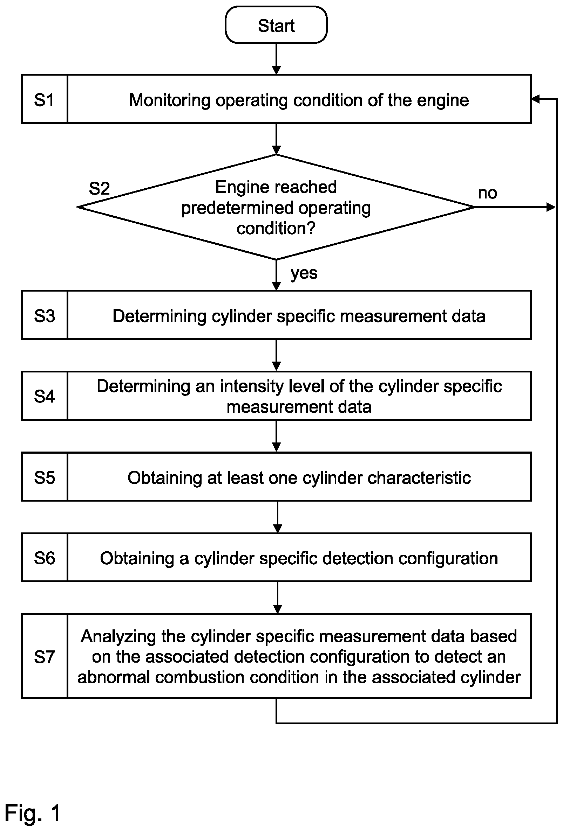

Figure 1 depicts a flow diagram illustrating a method for detecting abnormal combustion, i.e. an abnormal combustion condition or event, in particular combustion knock, in at least one cylinder of an internal combustion engine, referred to as 'the engine' hereinafter. The proposed method may be employed to detect abnormal combustion conditions in any suitable engine, in particular in reciprocating engines such as a stationary gas engine. As such, the method is not limited to be applied to engines of a specific type or application, but rather may be applied among different types of engines, such as diesel engines or gas engines, and among different applications, such as engines used in power plants or vehicles as a main or auxiliary engine or the like.

Preferably, the engine to be monitored by the proposed method comprises a plurality of cylinders, for example four, eight, twelve or eighteen cylinders. The cylinders may be provided in an engine block and may be delimited from above by at least one cylinder head. Each cylinder may be provided with a combustion chamber delimited by a piston accommodated in the cylinder. The pistons may be configured for reciprocating and axial movement within the cylinders and may be coupled to a crank shaft of the engine such that the reciprocating movement of the pistons is transferred into a rotating movement of the crank shaft. By such a configuration, during operation of the engine, an air fuel mixture is supplied to and ignited in each cylinder so as to produce highpressure gases which apply forces to and thus axially move the associated pistons, thereby rotating the crank shaft.

The engine to be monitored by the proposed method further comprises a control unit, also referred to as 'engine control unit' or 'engine control module', which is configured to control and monitor operation of the engine. Specifically, the control unit is of an electronic control unit type and is configured to read out measurement data from a plurality of sensors monitoring a variety of engine operating parameters. Further, the control unit is configured to process and interpret the thus acquired measurement signal and, in response, may control actuation of a plurality of engine actuators so as to set and adjust an operating point of the engine, e.g. by controlling ignition properties, such as amount and composition of air fuel mixture to be fed to and ignited in the combustion chambers, ignition timing, valve actuation and timing, etc. According to one configuration, the control unit may comprise a microcontroller for monitoring and controlling operation of the engine. Further, the control unit may be configured to receive and transmit information and signals via Controller Area Network (CAN) bus, Modbus or Ethernet.

The basic structure and function of such an internal combustion engine and its components, in particular the control unit, are well known to a person skilled in the art and are thus not further specified. Rather, the method for monitoring operation of the engine, i.e. for detecting abnormal combustion conditions, is addressed in the following, which is referred to as the 'method' hereinafter.

The proposed method is intended and configured for detecting abnormal combustion occurring in at least one cylinder during operation of the engine. In the context of the present disclosure, the term 'abnormal combustion' refers to any unintended deviation from a desired combustion process within a cylinder of the engine and in particular refers to a combustion knock condition or to a pre-ignition condition occurring during an operating cycle of a cylinder.

In the following, with reference to Fig. 1, a method is specified which is configured for detecting abnormal combustion in the form of combustion knock in at least one cylinder, in particular in more than one cylinder or in each cylinder, of the engine. As set forth above, combustion knock may result when combustion of at least some of the air fuel mixture within a combustion chamber of a cylinder explodes outside an intended combustion front propagation during an operating cycle. In general, the term 'operating cycle' refers to a combustion cycle of one cylinder which comprises the steps of: supplying an air fuel mixture into the cylinder; combusting the air fuel mixture; and discharging exhaust gases from the engine thereafter. Typically, the operating cycle is associated to one or more piston strokes within the cylinder.

In an alternative embodiment or additionally, the method may be intended and configured for determining other abnormal combustion conditions, i.e. other than combustion knock. For example, the method may be configured for detecting at least one of a 'no combustion condition', 'an incomplete combustion condition' and 'distorted combustion condition' during an operating cycle of at least one cylinder. Specifically, in this context, the term 'no combustion condition' may refer to an operating cycle of a cylinder in which no combustion takes place. The term 'incomplete combustion condition' may refer to an operating cycle of a cylinder during which the air fuel mixture present in the associated combustion chamber is incompletely burned, i.e. only a part thereof is combusted. Further, the term 'distorted combustion condition' may refer to an operating cycle of a cylinder in which combustion is not initiated at a desired timing, such as pre-ignition condition. In particular, the method depicted in Fig. 1 may be extended to further determine pre-ignition conditions.

Although the method described in the following is intended for detecting knocking conditions within a cylinder, the technical features specified hereinafter may also refer and be applied for detecting the above described other abnormal combustions conditions.

Fig. 1 depicts an overview of the proposed method for detecting combustion knock in at least one cylinder of the engine. When conducting the method, multiple method steps are performed. In the shown method, these steps are successively performed in a given order. However, the method is not limited to this configuration. Rather, where applicable, individual method steps may alternatively be performed in parallel and/or in a different order.

The proposed method may be carried out by the control unit of the engine. That is, at least a part of the method steps or all method steps may be performed by the control unit.

The method may be performed iteratively during operation of the engine. That is, the method may be performed in iterations during operation of the engine. In particular, individual iterations may be initiated or performed at predetermined and/or regular time intervals. Alternatively, the method may be performed continuously, i.e. with no pause between iterations. That is, after completing one iteration, the next iteration is directly performed. According to one configuration of the method, one iteration of the method is performed per cylinder and per operating cycle of the cylinder. In other words, for each cylinder to be monitored, one iteration of the method is performed for each operating cycle.

The method is initiated upon starting the engine. That is, upon starting the engine, the method proceeds to method step S1. Further, as indicated by returning arrows in Fig. 1, each iteration of the method starts with method step S1 and proceeds according to the flow diagram depicted in Fig 1.

In step S1, an operating condition of the engine is monitored, in particular by the control unit. In this step, the control unit may determine and monitor at least one operating parameter of the engine, such as an engine speed, an engine temperature, etc. For doing so, the control unit may obtain measurement signals from at least one engine sensor.

In a next step S2, the monitored operating condition is compared to a predetermined operating condition. Specifically, the control unit may determine whether the at least one monitored engine operating parameter has reached a predetermined threshold or lies within a predetermined range. This step is performed to ensure that the engine is running at a predetermined operating condition, which in particular allows for reliably detecting abnormal combustion conditions, before proceeding to the next method steps. In other words, the method proceeds to a next step S3 when the engine reaches the predetermined operating condition. According to one embodiment, the engine speed is monitored and the method proceeds to step S3 when the monitored engine speed reaches a predetermined minimum engine speed. If the predetermined operating condition is not reaches, the method returns to step S 1, thereby initiating a next iteration of the method. In other words, once the engine has reached the predetermined operating condition, the detection is activated.

In the further course of the method, a cylinder specific analysis is performed. That is, the following method steps S3 to S7 are performed per cylinder to be monitored. For the sake of simplicity and to avoid any redundancies, the following method steps are exemplarily described in connection with the detection of abnormal combustion in one of the plurality of cylinders of the engine which, however, accordingly apply to and are performed for detecting abnormal combustion in the other cylinders of the engine.

In step S3, cylinder specific measurement data are determined for the associated cylinder based on measurement signals acquired by at least one vibrations sensor. In this step, a raw signals acquired by the at least one vibration sensor is processed to extract information of interest therefrom, i.e. the cylinder specific measurement data. For acquiring the raw signals, i.e. the measurement signals, one or more vibration sensors may be employed which may be distributively arranged at or in the engine, in particular at a surface of the engine block and/or cylinder head of the engine. The at least one vibration sensor is configured to sense vibrations to provide the measurement signals being indicative of a vibration intensity or vibration amplitude sensed by the vibration sensor over time. Specifically, the vibration sensor may be configured to measure movement, i.e. oscillating movements, of the engine. For example, the vibration sensor may be provided in the form of an accelerometer. Such an accelerometer may be configured to sense inertial forces acting on a test mass provided therein. In this way, movement or vibrations induced by the engine may be transferred into an electrical signal, i.e. the measurement signals. The thus measured vibration signals are referred to as 'measurement signals' hereinafter and may constitute raw signals acquired by vibration sensor.

The at least one vibration sensor may be configured to continuously measure and provide the measurement signals, in particular upon starting the engine. In other words, during operation of the engine, the at least one vibration sensor is configured to acquire and in particular transmit the measurement signals continuously, i.e. at all times. Once the engine reaches the predetermined operating condition, the measurement signals are considered as qualified signals and are further processed in step S3.

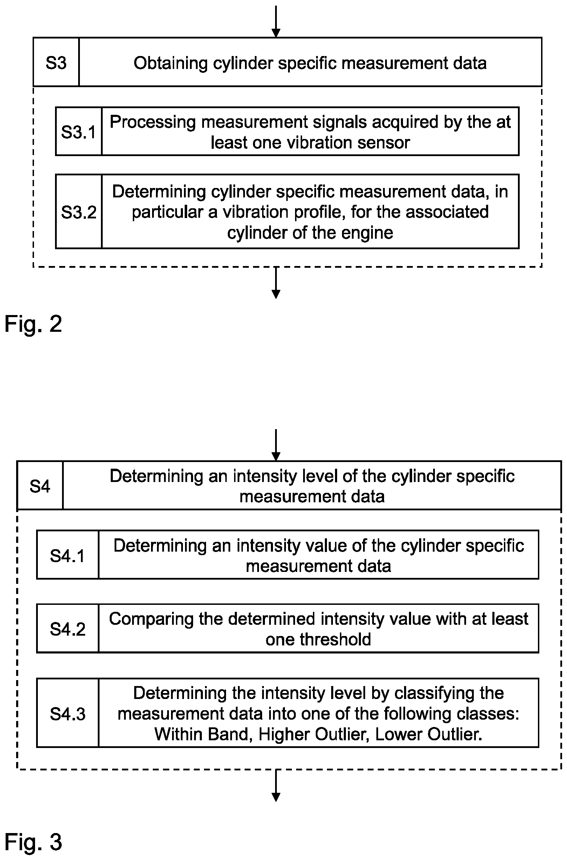

In Fig. 2, step S3 of obtaining cylinder specific measurement data is depicted in more detail. In general, step S3 is intended to subject the measurement signals, i.e. the raw signals, acquired by the at least one vibration sensor to signal characterization to extract the information of interest. For doing so, in a first sub-step 3.1, the measurement signals acquired by the at least one vibration sensor are processed, in particular by applying at least one of filtering techniques, time windowing techniques and signal aggregation techniques. In this context, 'filtering' may be applied for eliminating spikes and high-frequency noise from the measurement signals. 'Time windowing' may be applied for associating portions of the measurement signals acquired by individual vibration sensors to a specific cylinder. 'Signal aggregation' may be applied to consolidate measurement data acquired by more than one vibration sensor.

In a next sub-step 3.2, based on the processed measurement signals, the cylinder specific measurement data are determined for each cylinder. In the shown configuration, the cylinder specific measurement data is provided in the form of a vibration profile associated to one cylinder. As such, at least one vibration profile may be associated per cylinder. Specifically, the vibration profile indicates the course of a measured vibration amplitude or intensity over time.

Although in the shown configuration the steps of processing the measurement signals and of determining the cylinder specific measurement data are provided as separate sub-steps, in an alternative embodiment, this may be performed within a single step. As such, the processing of the raw measurement signals may be performed to determine the cylinder specific measurement data, in particular the vibration profile associated to a cylinder.

Step S3 may be performed by the control unit. In this configuration, the control unit receives the raw measurement signals from the at least one vibration sensor and, based thereupon, determines the measurement data. Alternatively, step S3 may be performed by another unit of the engine, for example by the at least one vibration sensor. In this configuration, the control unit may receive the cylinder specific measurement data from another unit of the engine.

In a next optional step S4 of the method, the cylinder specific measurement data is subjected to an intensity analysis to determine an intensity level of the cylinder specific measurement data. By doing so, an intensity of vibrations occurring in the associated cylinder during operation of the engine is determined. Specifically, the intensity level may be indicative of a relative intensity of the cylinder specific measurement data, in particular compared to a reference intensity.

In Fig. 3, step S4 of performing the intensity analysis is depicted in more detail. In a first sub-step S4.1, an intensity value of the cylinder specific measurement data is obtained. The intensity value may refer to an amplitude of the vibration profile associated to the cylinder. Specifically, the intensity value may refer to a maximum value, in particular to a maximum amplitude of the vibration profile within its associated time window. Alternatively, the intensity value may refer to an average value, in particular to an average amplitude of the vibration profile within the associated time window.

In a next sub-step 4.2, the determined intensity value is compared to at least one threshold. Based on this comparison, in sub-step 4.3, an intensity level of the cylinder specific measurement signal and thus of the vibrations associated to the cylinder is determined. Specifically, the intensity level may be determined by classifying the cylinder specific measurement data, in particular the associated cylinder, into one of at least two classes indicating an intensity level of the cylinder specific measurement data. In the shown embodiment, the cylinder specific measurement data and thus the associated cylinder may be classified into one of the following three categories: `Within Band', `Higher Outlier' and `Lower Outlier'. For doing so, the determined intensity value of the cylinder specific measurement data may be compared to a predetermined threshold range. In case the determined intensity value lies within the threshold range, the measurement data is classified as `Within Band'. In case the determined intensity value lies above the predetermined threshold range, the measurement data is classified as `Higher Outlier'. In case the determined intensity value lies below the predetermined threshold range, the measurement data is classified as `Lower Outlier'.

Thereafter, the method proceeds to step S5 which refers to a step of classifying the associated cylinder. Specifically, in this step, at least one cylinder specific characteristic is obtained for the associated cylinder, wherein the cylinder specific characteristic is determined in dependence on at least one of a structural arrangement and an operating condition of the associated cylinder.

As set forth above, for determining at least a part of the at least one cylinder specific characteristic, the structural arrangement of the associated cylinder, i.e. for which the cylinder specific characteristic is to be obtained, may be taken into account. For doing so, stimulation techniques may be employed, in particular computer simulations, such as structure or steady state stiffness simulations, e.g. by applying Finite Element Methods. In other words, the at least one cylinder specific characteristic may be determined by employing computer simulations.

Alternatively or additionally, the at least one cylinder specific characteristic may be determined by employing on-engine investigations during operation of the engine. As such operating conditions of the engine, in particular of the cylinder, may be taken into account for determining at least a part of the at least one cylinder specific characteristic. For doing so, on-engine investigation results may be taken into account. The on-engine investigation results may be derived based on test runs conducted on the engine or conducted on a reference engine. Alternatively or additionally, the on-engine investigation results may be derived during an intended use of the engine, in particular during its application specific use. For doing so, for example, the intensity analysis performed in step S4, i.e. the intensity level of the measurement data associated to the cylinder, may be taken into account.

According to one embodiment, the obtained at least one cylinder specific characteristic may indicate that the associated cylinder is at least one of: `prone to valve closure noise', 'prone to piston slap noise', `prone to knocking', `subjected to a transmission asymmetry', `prone to pre-ignition'.

In the shown configuration, upon performing step S5, the associated cylinder is classified into only one or at least one of the following classification categories: `prone to valve closure noise', 'prone to piston slap noise', `prone to knocking', `transmission asymmetry', `prone to pre-ignition' and 'unclassified'. In this context, classification into at least one of these classification categories constitutes a cylinder specific characteristic.

To determine whether or not the associated cylinder is to be classified into the category 'prone to valve closure noise', a structural analysis, in particular a computer implemented structure stimulation, may be performed. By doing so, it may be determined which cylinders are potentially subjected to valve closure noise at which time windows during their operating cycle. To determine whether or not the associated cylinder is to be classified into the category 'prone to piston slap noise', an intensity analysis of cylinder specific measurement data may be performed, in particular in a predetermined time window band. To determine whether or not the associated cylinder is to be classified into the category `prone to knocking', a computer implemented simulation and/or on-engine investigations results may be taken into account. To determine whether or not the associated cylinder is to be classified into the category `transmission asymmetry', a steady state structural simulation and/or a stiffness analysis may be performed. To determine whether or not the associated cylinder is to be classified into the category `prone to pre-ignition', an intensity analysis of cylinder specific measurement data may be performed, in particular in a predetermined time window band. This analysis may also be applied to determine a pre-ignition condition as an abnormal combustion condition. Any cylinder that does not fall into one of the above categories or a combination of them may be classified into the category 'unclassified'.

In a next step S6, a cylinder specific detection configuration, which may also be referred to as abnormal combustion detection configuration or knocking detection configuration, is defined in dependence on the at least one cylinder characteristic of the associated cylinder determined in step S5 and optionally in dependence on the intensity level determined in step S4.

In the context of the present disclosure, the term 'detection configuration' refers to a configuration which specifies how detection of abnormal combustion is to be performed, in particular based on what kind of detection procedure and detection parameters. As such, the detection configuration is decisive for how and under which circumstances an abnormal combustion condition in the associated cylinder is to be detected. Specifically, the detection configuration may comprise or specify a detection time window, a detection method and a detection condition.

In the context of the present disclosure, the term 'detection time window', which may also be referred to a 'detection time interval', refers to a time interval, in particular within the operating cycle of the associated cylinder, at which the cylinder specific measurement data is to be analyzed to determine whether abnormal combustion, in particular a knocking event, has occurred during operation of the associated cylinder. In other words, the detection time window is a time window of interest, wherein the cylinder specific measurement data associated to this time window is to be analyzed to detect and qualify a combustion knock. That is, the detection time window indicates at least a portion or subset of the cylinder specific measurement data to be analyzed for detecting abnormal combustion.

The detection time window may correspond to or may rule out at least one of a core combustion window, a pre-ignition window, a valve closure noise window, a piston slap noise window and a global window. These time windows refer to a portion of the operating cycle of the associated cylinder.

Specifically, the term `core combustion window' may refer to a time window during which combustion in the combustion chamber, in particular a main combustion chamber into which a pre-combustion chamber protrudes, takes place. The term 'pre-combustion window' may refer to a time window of the operating cycle during which pre-combustion, in particular in a pre-combustion chamber, takes place. The term 'valve closure noise window' may refer to a time window of the operating cycle during which valve closure noise is present. More specifically, the valve closure noise window may refer to a time window during which air and/or fuel is supplied into the cylinder. Alternatively or additionally, the valve closure noise window may refer to a time window during which exhaust gases are discharged from the cylinder. The term 'piston slap noise window' may refer to a time window of the operating cycle during which piston slap noises are present. The term 'global window' may refer to a time window of the operating cycle which encompasses the core combustion window. As such, the core combustion window is smaller compared to the global window. Further, the global window may at least partly encompass at least one of the pre-ignition window, the valve close noise window and the piston slap noise window.

A set forth of above, the detection configuration further specifies the detection method, which may also be referred to as abnormal combustion detection method or combustion knock detection method. The detection method in the context of the present disclosure defines the detection procedure specifying how the cylinder specific measurement data, in particular within the detection time window, is to be processed to detect abnormal combustion. For example, the detection method may be selected from at least one of a maximum intensity approach, an integral intensity approach and a difference monitoring approach.

According to the maximum intensity approach, a maximum value of the amplitude, in particular the vibration intensity, of the cylinder specific measurement data in the detection window may be derived and subsequently compared to a predetermined threshold to determine whether abnormal combustion, in particular a knocking event, has occurred within the cylinder.

According to the integral intensity approach, an integral value of the amplitude, in particular the vibration intensity, of the cylinder specific measurement data within the detection window may be derived and subsequently compared to a predetermined threshold to determine whether abnormal combustion, in particular a knocking event, has occurred within the cylinder.

According to the difference monitoring approach, a difference may be calculated between a maximum value of the amplitude, in particular the vibration intensity, of the cylinder specific measurement data within the detection window and an average of mean values across a plurality of preceding detection windows, i.e. referring to preceding operating cycles. The thus derived difference may subsequently be compared to a threshold to detect an abnormal combustion condition.

A set forth of above, the detection configuration further specifies the detection condition which refers to a predefined condition, in particular with regard to the obtained and in particular processed cylinder specific measurement data, indicating an abnormal combustion condition in the associated cylinder. In other words, the detection condition may define a threshold to be compared to the cylinder specific measurement data to detect the abnormal combustion condition. Specifically, the detection condition may define a detection threshold, in particular a threshold used in the above described detection methods. The detection condition, in particular the detection threshold, may be cylinder specific condition or value or a global condition or value, i.e. applicable to all cylinders of the engine.

In the shown configuration each one of the detection time window, the detection method, and the detection condition is defined in dependence on the at least one cylinder characteristic of the associated cylinder determined in step S5 and optionally in dependence on the intensity level determined in step S4.

In the method according to Fig. 1, step S5 and S6 are performed after method step S4. However, the proposed method is not limited to this configuration. Alternatively, step S5 and S6 may be performed before or in parallel to method step S4.

Further, in the shown method, determination of the cylinder specific characteristic and determination of the detection configuration may, at least partly, be performed prior to performing the method. The results of these determinations are then obtained in steps S5 and S6 when performing the method. For example, determination of at least a part of the cylinder specific characteristics may be determined before start-up or initial operation of the engine.

In a next step S7, the cylinder specific measurement data is analyzed by the control unit based on the associated detection configuration to determine an abnormal combustion condition in the associated cylinder, in particular to determine whether the associated cylinder is subjected to a knocking event or not.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention. This is in particular the case with respect to the following optional features which may be combined with some or all embodiments, items and/or features mentioned before in any technically feasible combination.

Accordingly, a method for detecting abnormal combustion, in particular combustion knock and/or pre-ignition, in at least one cylinder of an internal combustion engine is proposed. The method may comprise a step of determining cylinder specific measurement data for each one of the at least one cylinder based on measurement signals acquired by at least one vibration sensor; a step of obtaining a cylinder specific detection configuration for each one of the at least one cylinder; and a step of analyzing, for each one of the at least one cylinder, the cylinder specific measurement data based on the associated detection configuration to detect an abnormal combustion condition.

In the context of the present invention, it has been found that, owing to multiple dependencies and significant variance in cylinder characteristics within an engine, an improved detection may be provided when considering cylinder specific characteristics. Since in the proposed method a cylinder specific detection configuration is defined for each cylinder to be monitored, structural and operational differences among different cylinders of the engine are taken into account. This allows for more reliably detecting abnormal combustion conditions within individual cylinders.

The method may further comprise a step of monitoring an operating condition of the engine, wherein the method proceeds, in particular to the step of determining the cylinder specific measurement data, when the engine reaches a predetermined engine condition. Specifically, in the step of monitoring an operating condition, an engine speed of the engine may be monitored and the method may proceed to a subsequent step when the monitored engine speed reaches a predetermined minimum engine speed.

Alternatively or additionally, the step of determining cylinder specific measurement data may comprise a sub-step of processing the measurement signals acquired by the at least one vibration sensor by applying at least one of filtering and time windowing. Alternatively or additionally, the step of determining cylinder specific measurement data may comprise a sub-step of determining a vibration profile for each one of the at least one cylinder.

In a further development, the method may further comprise a step of determining an intensity level of the cylinder specific measurement data. Optionally, the step of determining the intensity level may comprise a sub-step of determining a maximum or average intensity value of the cylinder specific measurement data and a sub-step of comparing the determined intensity value with at least one threshold.

In a further development, the method may further comprise a step of obtaining at least one cylinder characteristic for each one of the at least one cylinder. Optionally, the cylinder characteristic may be determined in dependence on at least one of a structural arrangement and an operating condition of the associated cylinder. Optionally, the detection configuration for each one of the at least one cylinder may be determined in dependence on the associated cylinder characteristic.

Further, the cylinder specific characteristic may be determined by employing computer stimulations and/or by employing on-engine investigations during operation of the engine.

In a further development, the cylinder specific characteristic may indicate that the associated cylinder is prone to at least one of: valve closure noise, piston slap noise and knocking.

The cylinder specific detection configuration may be further defined in dependence on the intensity level of the associated cylinder specific measurement date.

In a further development, the cylinder specific detection configuration may specify at least one of a detection time window indicating a portion of the measurement data to be analyzed, a detection method, and a detection condition. In particular the detection time window may correspond to at least one of a pre-ignition window, a core combustion window, a valve closure noise window and a piston slap noise window within an operating cycle of the associated cylinder. Alternatively or additionally, the detection condition may define a threshold to be compared to the cylinder specific measurement data to detect the abnormal combustion condition. Alternatively or additionally, at least one of the detection time window, the detection method, and the detection condition is defined in dependence on the associated cylinder characteristic.

Furthermore, a control unit of an internal combustion engine may be provided for detecting abnormal combustion, in particular combustion knock and/or pre-ignition, in at least one cylinder. The control unit may be configured for determining cylinder specific measurement data for each one of the at least one cylinder based on measurement signals acquired by at least one vibration sensor, for obtaining a cylinder specific detection configuration for each one of the at least one cylinder, and for analyzing, for each one of the at least one cylinder, the cylinder specific measurement data based on the associated detection configuration to detect an abnormal combustion condition.

### Industrial Applicability

With reference to Figure 1 and its accompanying description, a method and control unit for detecting abnormal combustion in at least one cylinder of an internal combustion engine are suggested. The method and the control unit as mentioned above are applicable in internal combustion engines provided, for example, as stationary gas engines. The suggested method may be performed in or for conventional internal combustion engines. Further, the suggested control unit may replace conventional control units and may serve as a replacement or retrofit part.

## Claims

1. Method for detecting abnormal combustion, in particular combustion knock or a pre-ignition, in at least one cylinder of an internal combustion engine, comprising:
- a step (S3) of determining cylinder specific measurement data for each one of the at least one cylinder based on measurement signals acquired by at least one vibration sensor;
- a step (S6) of obtaining a cylinder specific detection configuration for each one of the at least one cylinder; and
- a step (S7) of analyzing, for each one of the at least one cylinder, the cylinder specific measurement data based on the associated detection configuration to detect an abnormal combustion condition.

2. Method according to claim 1, further comprising a step (S 1) of monitoring an operating condition of the engine, wherein the method proceeds when the engine reaches a predetermined engine condition.

3. Method according to claim 2, wherein in the step (S 1) of monitoring an operating condition, an engine speed of the engine is monitored and the method proceeds when the monitored engine speed reaches a predetermined minimum engine speed.

4. Method according to any one of claims 1 to 3, wherein the step (S3) of determining cylinder specific measurement data comprises a sub-step of processing the measurement signals acquired by the at least one vibration sensor by applying at least one of filtering and time windowing.

5. Method according to any one of claims 1 to 4, wherein the step (S3) of determining cylinder specific measurement data comprises a sub-step of determining a vibration profile for each one of the at least one cylinder.

6. Method according to any one of claims 1 to 5, further comprising a step (S4) of determining an intensity level of the cylinder specific measurement data, wherein in particular the step (S4) of determining the intensity level comprises a sub-step of determining a maximum or average intensity value of the cylinder specific measurement data and a sub-step of comparing the determined intensity value with at least one threshold.

7. Method according to any one of claims 1 to 6, further comprising a step (S5) of obtaining at least one cylinder characteristic for each one of the at least one cylinder, wherein the cylinder characteristic is determined in dependence on at least one of a structural arrangement and an operating condition of the associated cylinder, and wherein the detection configuration for each one of the at least one cylinder is determined in dependence on the associated cylinder characteristic.

8. Method according to claim 7, wherein the cylinder specific characteristic is determined by employing computer stimulations or by employing on-engine investigations during operation of the engine.

9. Method according to claim 7 or 8, wherein the cylinder specific characteristic indicates that the associated cylinder is prone to at least one of: valve closure noise, piston slap noise and knocking.

10. Method according to any one of claims 6 to 9, wherein the cylinder specific detection configuration is further defined in dependence on the intensity level of the associated cylinder specific measurement date.

11. Method according to any one of claims 1 to 10, wherein the cylinder specific detection configuration specifies at least one of a detection time window indicating a portion of the measurement data to be analyzed, a detection method, and an abnormal combustion detection condition.

12. Method according to any one of claims 1 to 11, wherein the detection time window corresponds to at least one of a pre-combustion window, a core combustion window, a valve closure noise window and a piston slap noise window within an operating cycle of the associated cylinder.

13. Method according to claim 12, wherein the detection condition defines a threshold to be compared to the cylinder specific measurement data to detect the abnormal combustion condition.

14. Method according to any one of claims 11 to 13, wherein at least one of the detection time window, the detection method, and the abnormal combustion detection condition is defined in dependence on the associated cylinder characteristic.

15. Control unit of an internal combustion engine for detecting abnormal combustion, in particular combustion knock and/or pre-ignition condition, in at least one cylinder, wherein the control unit is configured for:
- determining cylinder specific measurement data for each one of the at least one cylinder based on measurement signals acquired by at least one vibration sensor;
- obtaining a cylinder specific detection configuration for each one of the at least one cylinder; and
- analyzing, for each one of the at least one cylinder, the cylinder specific measurement data based on the associated detection configuration to detect an abnormal combustion condition.
